Europäisches Patentamt

European Patent Office

Office européen des brevets

(11) Publication number: **0 582 943 A2**

## EUROPEAN PATENT APPLICATION

(21) Application number: 93112443.2

(22) Date of filing: 03.08.93

(51) Int. Cl.5: **C08F 4/646**, C08F 10/00

(30) Priority: **10.08.92 JP 232584/92**

(43) Date of publication of application:
**16.02.94 Bulletin 94/07**

(84) Designated Contracting States:
**DE FR GB IT**

(71) Applicant: **TOSOH CORPORATION**
**No. 4560, Kaisei-cho,**
**Shinnanyo-shi**
**Yamaguchi-ken 746(JP)**

(72) Inventor: **Hara, Daiji**
**129, Oaza-hazuotsu**
**Yokkaichi-shi, Mie-ken(JP)**
Inventor: **Mori, Mitsuhiro**
**61-1, Oaza-yamazaki,**
**Aza-kamiyashiki,**
**Sobue-cho**
**Nakajima-gun, Aichi-ken(JP)**

(74) Representative: **Wächtershäuser, Günter, Dr.**
**Tal 29**
**D-80331 München (DE)**

(54) Method for producing a polyolefin.

(57) A method for producing a polyolefin in the presence of a catalyst comprising a transition metal compound and an organometallic compound, which comprises polymerizing at least one olefin in the presence of a catalyst system comprising:

(A) a suspension state catalyst component obtained by adding and contacting an oxygen-containing organic compound of silicon of the formula t-Bu(R$^1$)Si(OR$^2$)$_2$ wherein t-Bu is a tertiary butyl group, R$^1$ is a C$_{2-20}$ linear hydrocarbon group, and R$^2$ is a C$_{1-5}$ hydrocarbon group, to a suspension having a solid catalyst component containing magnesium, titanium, halogen and an electron donative compound suspended in an inert solvent, in an amount of from 0.5 to 100 mols per gram atom of titanium in the solid catalyst component, and

(B) at least one member selected from the group consisting of organometallic compounds of metals of Groups IA, IIA, IIB, IIIB and IVB of the Periodic Table.

EP 0 582 943 A2

The present invention relates to a method for producing a polyolefin. More particularly, the present invention relates to a method whereby a polymer having a good particle shape and having the stereoregularity, copolymerizability, molecular weight and molecular weight distribution controlled can be obtained in good yield by using a certain specific catalyst in (co)polymerization of ethylene and/or an α-olefin having at least 3 carbon atoms.

Heretofore, as a catalyst for polymerization of an olefin, an α-type titanium trichloride obtained by reducing titanium tetrachloride with hydrogen, a purple γ-type titanium trichloride obtained by reducing titanium tetrachloride with aluminum or a δ-type titanium trichloride obtained by pulverizing such a titanium trichloride by a ball mill, has been, for example, known. Further, as a method for modifying such catalysts, it is known to subject them to mixing and pulverizing treatment together with various modifying agents. However, when polymerization was conducted by using such a catalyst, the catalytic activities for polymerization were low, and the catalyst residue in the resulting polymer was substantial, whereby a so-called deashing step was indispensable.

Further, in recent years, a number of proposals have been made for producing a polyolefin by means of a catalyst system comprising a solid catalyst component containing magnesium, titanium and halogen as the main components, an organometallic compound and an electron doner. However, with many of them, further improvements are desired with respect to the catalytic activities as well as the stereoregularity and powder properties of the polymers. Especially in a case where the catalytic activities are low, odors attributable to the electron doner incorporated to the polymerization system and to the byproducts derived therefrom may sometimes create a problem.

The present inventors have previously proposed methods for obtaining stereoregular polyolefins in good yield by means of specific solid catalyst components comprising Mg, Ti and halogen as the main components in Japanese Unexamined Patent Publications No. 3007/1988, No. 314210/1988, No. 317502/1988, No. 105/1989 and No. 165608/1989. In these methods, catalyst components excellent in the catalytic activities as well as the stereoregularity and particle properties of the polymers, are obtained by reacting a reaction product of a homogeneous solution containing Mg, Ti and an electron donative compound with an aluminum halide compound, with a titanium halide and an electron donative compound.

Further, when an aromatic compound such as phenyltriethoxysilane or ethyl benzoate is added to the polymerization system, as the electron donative compound for the above-mentioned catalyst component, an odor of the formed powder attributable to the aromatic group and the presence of the aromatic compound itself in the formed powder may sometimes create a problem. For the purpose of solving this odor problem, many methods have been proposed in which a branched chain alkyl group-substituted oxygen-containing silicon compound such as t-butylmethyldimethoxysilane, di(t-butyl)dimethoxysilane, diisobutyldimethoxysilane or cyclohexylmethyldimethoxysilane is added as the electron donative compound. However, among such branched chain alkyl group-substituted silicon compounds, many have practical problems in their industrial use such that the production costs are high, and the control of the molecular weight to a low molecular weight level by hydrogen is not easy. Further, heretofore, a method has been known wherein a linear alkyltrialkoxysilane such as ethyltrimethoxysilane or butyltriethoxysilane is used as a silicon compound containing no aromatic group. However, it has problems such that the catalytic activities are low, and the rigidity of the molded products of the resulting polymer is low, and further improvements are desired.

Further, Japanese Unexamined Patent Publications No. 187706/1987 and No. 187707/1987 propose methods in which no electron donative compound from outside is used in the polymerization system by using a solid catalyst component obtained by contacting an alkoxysilane compound having a branched chain hydrocarbon group to a solid component containing magnesium, titanium and halogen as the main components. However, such methods have been inadequate to obtain polymers having high rigidity in good yield.

The present inventors have conducted extensive studies to develop a catalyst system for polymerization of an olefin to obtain a highly rigid polymer economically and in good yield, in order to overcome the drawbacks of the prior art.

As a result, it has been found that the above problems can be solved by contacting an oxygen-containing organic compound of silicon having a specific molecular structure to a suspension having a solid catalyst component containing magnesium, titanium, halogen and an electron donative compound suspended in an inert solvent in a certain specific amount to the titanium in the solid catalyst component and then using it for polymerization without subjecting it to any washing operation. The present invention has been accomplished on the basis of this discovery.

Thus, the present invention provides a method for producing a polyolefin in the presence of a catalyst comprising a transition metal compound and an organometallic compound, which comprises polymerizing at least one olefin in the presence of a catalyst system comprising:

2

(A) a suspension state catalyst component obtained by adding and contacting an oxygen-containing organic compound of silicon of the formula t-Bu($R^1$)Si(O$R^2$)$_2$ wherein t-Bu is a tertiary butyl group, $R^1$ is a $C_{2-20}$ linear hydrocarbon group, and $R^2$ is a $C_{1-5}$ hydrocarbon group, to a suspension having a solid catalyst component containing magnesium, titanium, halogen and an electron donative compound suspended in an inert solvent, in an amount of from 0.5 to 100 mols per gram atom of titanium in the solid catalyst component, and

(B) at least one member selected from the group consisting of organometallic compounds of metals of Groups IA, IIA, IIB, IIIB and IVB of the Periodic Table, particularly a method for producing a polyolefin as described above, wherein the solid catalyst component is prepared by reacting a homogeneous solution containing

(i) at least one member selected from the group consisting of metal magnesium and a hydroxylated organic compound, and oxygen-containing organic compounds of magnesium,

(ii) an oxygen-containing organic compound of aluminum, and

(iii) an oxygen-containing organic compound of titanium, with

(iv) an at least one aluminum halide, to obtain a solid product; and reacting the solid product with

(v) an electron donative compound, and

(vi) a titanium halide compound, and a gas phase polymerization method is employed for the polymerization.

Now, the present invention will be described in detail with reference to the preferred embodiments.

The solid catalyst component to be used in the present invention can be prepared, for example, by the methods disclosed in Japanese Unexamined Patent Publications No. 3007/1988, No. 314210/1988, No. 317502/1988, No. 105/1989 and No. 165608/1989, or by the following method.

Namely, it can be prepared by reacting

(i) at least one member selected from the group consisting of metal magnesium and a hydroxylated organic compound, and oxygen-containing organic compounds of magnesium,

(ii) an oxygen-containing organic compound of aluminum, and

(iii) an oxygen-containing organic compound of titanium such as a titanium alkoxide, to obtain a homogeneous solution; reacting the homogeneous solution with

(iv) an aluminum halide, to obtain a solid product; and reacting the solid product with

(v) an electron donative compound, and

(vi) a titanium halide compound.

When metal magnesium and a hydroxylated organic compound are used as the above reactant (i), metal magnesium can take any form such as powder form, granular form, foil form or ribbon form, and as the hydroxylated organic compound, alcohols and organic silanols are suitable.

As the alcohols, linear or branched aliphatic alcohols having from 1 to 18 carbon atoms, alicyclic alcohols or aromatic alcohols can be used. Specific examples include methanol, ethanol, n-propanol, i-propanol, n-butanol, iso-butanol, sec-butanol, t-butanol, n-hexanol, 2-ethylhexanol, n-octanol, i-octanol, n-stearyl alcohol, cyclopentanol, cyclohexanol and ethylene glycol. Further, benzyl alcohol and phenols such as phenol, cresol, xylenol and hydroquinone, may also be mentioned.

The organic silanols are selected from compounds having at least one hydroxyl group and an organic group which is an alkyl having from 1 to 12 carbon atoms, preferably from 1 to 6 carbon atoms, cycloalkyl, arylalkyl, aryl or alkylaryl group. For example, trimethylsilanol, triethylsilanol, triphenylsilanol and t-butyldimethylsilanol may be mentioned.

These hydroxylated organic compounds may be used alone or in combination as a mixture of two or more of them.

In addition, when metal magnesium is used to prepare the solid catalyst component for the component (A) of the present invention, it is advisable to add one or more substances that will react with the metal magnesium or will form an adduct, for example, polar substances such as iodine, mercuric chloride, an alkyl halide and an organic acid, for the purpose of accelerating the reaction.

Compounds belonging to the oxygen-containing organic compounds of magnesium include, for example, magnesium alkoxides such as magnesium methylate, magnesium ethylate, magnesium isopropylate, magnesium decanolate, magnesium methoxyethylate and magnesium cyclohexanolate, magnesium alkylalkoxides such as magnesium ethylethylate, magnesium hydroalkoxides such as magnesium hydroxymethylate, magnesium phenoxides such as magnesium phenate, magnesium naphthenate, magnesium phenanthlenate and magnesium cresolate, magnesium carboxylates such as magnesium acetate, magnesium stearate, magnesium benzoate, magnesium phenylacetate, magnesium adipate, magnesium sebacate, magnesium phthalate, magnesium acrylate and magnesium oleate, magnesium oxymates such as magnesium butyloxymate, magnesium dimethylglyoxymate and magnesium cyclohexyoxymate, magnesium

3

hydroxymate salts, magnesium hydroxylamine salts such as N-nitroso-N-phenylhydroxylamine derivatives, magnesium enolates such as magnesium acetylacetonate, and magnesium silanolates such as magnesium triphenyl silanolate. These oxygen-containing organic magnesium compounds may be used alone or in combination as a mixture of two or more of them.

As the oxygen-containing organic compound of aluminum for the reactant (ii), an oxygen-containing organic compound of the formula $A\ell(OR^3)_mX_{3-m}$ may be used. In this formula, $R^3$ represents a hydrocarbon group having from 1 to 20 carbon atoms, preferably from 1 to 10 carbon atoms. Such a hydrocarbon group may, for example, be a linear or branched alkyl group, a cycloalkyl group, an arylalkyl group, an aryl group or an alkylaryl group. m is a number satisfying $0<m\leq3$, and X represents a halogen atom.

Specific examples of the oxygen-containing organic compound of aluminum include trimethoxyaluminum, triethoxyaluminum, tri-n-propoxyaluminum, tri-i-propoxyaluminum, tri-n-butoxyaluminum, tri-sec-butoxyaluminum, tri-tert-butoxyaluminum, tri(2-ethylhexoxy)aluminum, triphenoxyaluminum, tribenzyloxyaluminum, dichloromethoxyaluminum, chlorodimethoxyaluminum, dichloro(2-ethylhexoxy)aluminum, chlorodi(2-ethylhexoxy)aluminum, dichlorophenoxyaluminum and chlorodiphenoxyaluminum. Use of an oxygen-containing organic compound of aluminum having several different hydrocarbon groups is also within the scope of the present invention. These oxygen-containing organic compounds of aluminum may be used alone or in combination as a mixture of two or more of them.

As the oxygen-containing organic compound of titanium for the reactant (iii), a compound of the formula $[O_pTi_u(OR^4)_q]_n$ may be used. In the formula, $R^4$ represents a hydrocarbon group having from 1 to 20 carbon atoms, preferably from 1 to 10 carbon atoms. Such a hydrocarbon group may, for example, be a linear or branched alkyl group, a cycloalkyl group, an arylalkyl group, an aryl group or an alkylaryl group. p, q and u are such that $p\geq0$, $q>0$ and $u\geq1$ and they are numbers agreeable with the valance of Ti, and n is an integer. It is particularly preferred to use an oxygen-containing organic compound of titanium wherein $0\leq p\leq1$, $1\leq u\leq2$ and $1\leq n\leq6$. Specific examples include titanium tetramethoxide, titanium tetraethoxide, titanium tetra-n-propoxide, titanium tetra-i-propoxide, titanium tetra-n-butoxide, titanium tetra-i-butoxide, tetra(n-nonyl) titanate, tetra(2-ethylhexyl) titanate, tetracresyl titanate and hexa-i-propoxy dititanate. Use of an oxygen-containing organic compound of titanium having several different hydrocarbon groups is also within the scope of the present invention. These oxygen-containing organic compounds of titanium may be used alone or in combination as a mixture or as a reaction product of two or more of them.

As the halogenated aluminum compound for the reactant (iv), the one represented by the formula $A\ell R^5_rX_{3-r}$ may be used. In the formula, $R^5$ represents a hydrocarbon group having from 1 to 20 carbon atoms, X represents a halogen atom, and r is a number satisfying $0<r\leq2$. $R^5$ is preferably selected from the group consisting of a linear or branched alkyl group, an alkoxy group, a cycloalkyl group, an arylalkyl group, an aryl group and an alkylaryl group. Such halogenated aluminum compounds may be used alone or in combination as a mixture of two or more of them. Specific examples of the halogenated aluminum compound include ethyl aluminum dichloride, n-propylaluminum dichloride, butylaluminum dichloride, i-butylaluminum dichloride, sesquiethylaluminum chloride, sesqui-i-butylaluminum chloride, sesqui-i-propylaluminum chloride, sesqui-n-propylaluminum chloride, diethylaluminum chloride, di-i-propylaluminum chloride, di-n-propylaluminum chloride, di-i-butylaluminum chloride, diethylaluminum bromide and diethylaluminum iodide.

The electron donative compound for the reactant (v) includes, for example, ethers, esters, ketones, phenols, amines, amides, imines, nitriles, phosphines, phosphites, stibines, arsines, phosphoryl amides and alcoholates. Among them, esters are preferred, and organic acid esters are most preferred. As the organic acid esters, mono- or di-esters of aromatic carboxylic acids, or mono- or di-esters of aliphatic carboxylic acids may be mentioned. Specific examples include butyl formate, ethyl acetate, butyl acetate, isobutyl isobutylate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartarate, dibutyl tartarate, diisobutyl tartarate, methyl benzoate, ethyl benzoate, methyl p-toluate, ethyl p-toluate, ethyl p-tert-butylbenzoate, ethyl p-anisate, isobutyl $\alpha$-naphthoate, ethyl cinnamate, monomethyl phthalate, dibutyl phthalate, diisobutyl phthalate, dihexyl phthalate, dioctyl phthalate, di-2-ethylhexyl phthalate, diallyl phthalate, diphenyl phthalate, diethyl isophthalate, diisobutyl isophthalate, diethyl terephthalate, dibutyl terephthalate, diethyl naphthalate and dibutyl naphthalate. Such electron donative compounds for the reactant (v) may be used alone or in combination as a mixture of two or more of them.

As the halogenated titanium compound for the reactant (vi), a titanium compound of the formula Ti-$(OR^6)_fX_{4-f}$ may be used. In the formula, $R^6$ represents a hydrocarbon group having from 1 to 20 carbon

EP 0 582 943 A2

atoms, X represents a halogen atom, and f is a number satisfying $0 \leq f < 4$. $R^6$ is preferably selected from the group consisting of a linear or branched alkyl group, an alkoxy group, a cycloalkyl group, an arylalkyl group, an aryl group and an alkylaryl group. Such halogenated titanium compounds may be used alone or combination as a mixture of two or more of them.

Specific examples of the halogenated titanium compound include titanium tetrachloride, ethoxytitanium trichloride, propoxytitanium trichloride, butoxytitanium trichloride, phenoxytitanium trichloride, diethoxytitanium dichloride, triethoxytitanium chloride, titanium tetrabromide, titanium tetraiodide and dichlorodibromotitanium.

The oxygen-containing organic compound of silicon of the formula t-Bu($R^1$)Si(O$R^2$)$_2$ wherein t-Bu is a tertiary butyl group, $R^1$ is a $C_{2-20}$ linear hydrocarbon group, and $R^2$ is a $C_{1-5}$ hydrocarbon group, may, for example, be t-butylethyldimethoxysilane, t-butyl-n-propyldimethoxysilane, t-butyl-n-butyldimethoxysilane, t-butyl-n-pentyldimethoxysilane, t-butyl-n-hexyldimethoxysilane, t-butyl-n-heptyldimethoxysilane, t-butyl-n-octyldimethoxysilane, t-butyl-n-nonyldimethoxysilane, t-butyl-n-decyldimethoxysilane, t-butyl-n-undecyldimethoxysilane, t-butyl-n-dodecyldimethoxysilane, t-butyl-n-tridecyldimethoxysilane, t-butyl-n-tetradecyldimethoxysilane, t-butyl-n-pentadecyldimethoxysilane, t-butyl-n-hexadecyldimethoxysilane, t-butyl-n-heptadecyldimethoxysilane, t-butyl-n-octadecyldimethoxysilane, t-butyl-n-nonadecyldimethoxysilane, t-butyl-n-eicosyldimethoxysilane, t-butylethyldiethoxysilane, t-butyl-n-propyldiethoxysilane, t-butyl-n-butyldiethoxysilane, t-butyl-n-pentyldiethoxysilane, t-butyl-n-hexyldiethoxysilane, t-butyl-n-heptyldiethoxysilane, t-butyl-n-octyldiethoxysilane, t-butyl-n-nonyldiethoxysilane, t-butyl-n-decyldiethoxysilane, t-butyl-n-undecyldiethoxysilane, t-butyl-n-dodecyldiethoxysilane, t-butyl-n-tridecyldiethoxysilane, t-butyl-n-tetradecyldiethoxysilane, t-butyl-n-pentadecyldiethoxysilane, t-butyl-n-hexadecyldiethoxysilane, t-butyl-n-heptadecyldiethoxysilane, t-butyl-n-octadecyldiethoxysilane, t-butyl-n-nonadecyldiethoxysilane, t-butyl-n-eicosyldiethoxysilane, t-butylethylmethoxyethoxysilane, t-butyl-n-propylmethoxyethoxysilane, t-butyl-n-butylmethoxyethoxysilane, t-butyl-n-pentylmethoxyethoxysilane, t-butyl-n-hexylmethoxyethoxysilane, t-butyl-n-heptylmethoxyethoxysilane, t-butyl-n-octylmethoxyethoxysilane, t-butyl-n-nonylmethoxyethoxysilane, b-butyl-n-decylmethoxyethoxysilane, t-butyl-n-undecylmethoxyethoxysilane, t-butyl-n-dodecylmethoxyethoxysilane, t-butyl-n-tridecylmethoxyethoxysilane, t-butyl-n-tetradecylmethoxyethoxysilane, t-butyl-n-pentadecylmethoxyethoxysilane, t-butyl-n-hexadecylmethoxyethoxysilane, t-butyl-n-heptadecylmethoxyethoxysilane, t-butyl-n-ocatadecylmethoxyethoxysilane, t-butyl-n-nonadecylmethoxyethoxysilane, t-butyl-n-eicosylmethoxyethoxysilane, t-butylethyldipropoxysilane, t-butyl-n-propyldipropoxysilane, t-butyl-n-butyldipropoxysilane, t-butylethyldi-i-propoxysilane, t-butyl-n-propyldi-i-propoxysilane, t-butyl-n-butyl-i-dipropoxysilane, t-butylethylmethoxypropoxysilane, t-butyl-n-propylmethoxypropoxysilane, t-butyl-n-butylmethoxypropoxysilane, t-butylethylethoxypropoxysilane, t-butyl-n-propylethoxypropoxysilane, t-butyl-n-butylethoxypropoxysilane, t-butylethyldibutoxysilane, t-butylethylbutoxymethoxysilane, t-butylethylbutoxymethoxysilane, t-butylethyldipentoxysilane, t-butylethylpentoxymethoxysilane, t-butyl-n-butyldi-t-butoxysilane, t-butyl-n-butyldi-sec-butoxysilane or t-butyl-n-butyl-i-pentoxymethoxysilane. These oxygen-containing organic compounds of silicon may be used alone or in combination as a mixture of two or more of them.

The solid catalyst component to be used in the present invention, can be prepared by reacting the reactant (iv) to a homogeneous solution obtained by reacting the above reactants (i) (ii) and (iii), and then reacting the reactants (v) and (vi) to the obtained solid product. These reactions are preferably conducted in a liquid medium. Therefore, when these reactants are not liquid by themselves under the operating conditions, or when the amount of liquid reactants is not sufficient, the reaction should be conducted in the presence of an inert organic solvent. As such an inert organic solvent, any solvent which is commonly used in this technical field may be employed. For example, an aliphatic, alicyclic or aromatic hydrocarbon or a halogenated derivative thereof, or a mixture thereof, may be mentioned. Specific examples include, isobutane, pentane, isopentane, hexane, heptane, cyclohexane, benzene, toluene, xylene, liquid parafin, chlorobenzene, 1,2-dichlorobenzene, 1,3-dichlorobenzene, benzyl chloride, methylene dichloride, 1,2-dichloroethane, 1,3-dichloropropane, 1,4-dichlorobutane, 1,1,1-trichloroethane, 1,1,2-trichloroethane, 1,1,1,2-tetrachloroethane, 1,1,2,2-tetrachloroethane, tetrachloroethylene, carbon tetrachloride and chloroform. These organic solvents may be used alone or in combination as a mixture. When a halogenated derivative or a mixture of halogenated derivatives is used, a good result may sometimes be brought about with respect to the polymerization activities or the stereoregularity of the resulting polymer.

There is no particular restriction as to the amounts of the above reactants (i), (ii), (iii), (iv), (v) and (vi) used to obtain the solid catalyst component. However, the molar ratio of the magnesium atom (i) to the oxygen-containing organic compound of aluminum (ii) is preferably selected within a range of from 1:0.01 to 1:20, or within a range of from 1:0.05 to 1:10 especially when it is intended to obtain polymer particles of a pellet size of at least 3,000 $\mu$m. Further, the molar ratio of the magnesium atom (i) to the oxygen-containing organic compound of titanium (iii) is preferably selected within a range of from 1:0.01 to 1:20, or preferably

5

within a range of from 1:0.1 to 1:5 especially when it is intended to obtain polymer particles of a pellet size having excellent powder properties. Furthermore, it is preferred to select the amounts of the reactants so that the ratio of the magnesium atom to the aluminum atom in the halogenated aluminum (iv) will be within a range of from 1:0.1 to 1:100, preferably from 1:0.1 to 1:20. If the ratio of the aluminum atom is larger than this range, the catalytic activities are likely to be low, or it tends to be difficult to obtain good powder properties. On the other hand, if the ratio is too small, it is likely that good powder properties will hardly be obtained. It is preferred to select the amounts so that the molar ratio of the magnesium atom (i) to the electron donative compound (v) will be within a range of from 1:0.05 to 1:5.0, preferably from 1:0.1 to 1:2.0. If the molar ratio departs from this range, a problem may result such that the polymerization activities are low or the stereoregularity of the polymer is low. Further, it is preferred to select the amounts so that the molar ratio of the magnesium atom (i) to the halogenated titanium compound (vi) will be within a range of from 1:1 to 1:100, preferably from 1:3 to 1:50. If the molar ratio departs from this range, a problem may result such that the polymerization activities are low, or the product will be colored.

With respect to the reaction conditions to obtain the homogeneous solution by the reaction of the reactants (i), (ii) and (iii), the reaction is conducted at a temperature within a range of from -50 to 300°C, preferably from 0 to 200°C for from 0.5 to 50 hours, preferably from 1 to 6 hours, in an inert gas atmosphere under an ordinary pressure or an elevated pressure. Further, here, formation of a homogeneous solution may be facilitated by an addition of the same electron donative compound as the above-mentioned compound (v). At the time of reacting the reactants (iv), (v) and (vi), the reaction is conducted at a temperature within a range of from -50 to 200°C, preferably from -30 to 150°C, for from 0.2 to 50 hours, preferably from 0.5 to 10 hours, in an inert gas atmosphere under an ordinary pressure or an elevated pressure.

The reaction of the reactant (iv) is important, and it is very important since it plays a decisive role for controlling the resulting solid product particles, the solid catalyst component particles, and the particle size and shape of the polymer particles obtained by using them.

Further, the reaction of the reactant (vi) may be conducted dividedly in multi steps.

At the time of the reaction of the reactant (vi), the reaction may be conducted in the presence of ethylene and/or an $\alpha$-olefin represented by the formula $R\text{-}CH=CH_2$ wherein R is a linear or branched, substituted or unsubstituted alkyl group having from 1 to 10 carbon atoms, preferably from 1 to 8 carbon atoms, or a hydrogen atom. In such a case, it is sometimes possible that an improvement is observed in the catalytic activities and the stereoregularity of the polymer.

Further, prior to the main polymerization, a small amount of the organometallic compound may be added to polymerize a small amount of ethylene and/or an $\alpha$-olefin of the formula $R\text{-}CH=CH_2$ wherein R is a linear or branched, substituted or unsubstituted alkyl group having from 1 to 10 carbon atoms, preferably from 1 to 8 carbon atoms, or a hydrogen atom, to obtain a prepolymer, which is then used.

The solid catalyst component thus obtained is then subjected to filtration or decantation to remove the remaining unreacted reactants and byproducts and then thoroughly washed with an inert organic solvent, or washed and isolated, followed by heating under an ordinary pressure or reduced pressure to remove the inert organic solvent, to obtain a solid catalyst component, which is used for the preparation of the catalyst component (A).

Namely, the solid catalyst component is suspended in an inert solvent, and the oxygen-containing organic compound of silicon of the formula $t\text{-}Bu(R^1)Si(OR^2)_2$ wherein t-Bu is a tertiary butyl group, $R^1$ is a $C_{2-20}$ linear hydrocarbon group, and $R^2$ is a $C_{1-5}$ hydrocarbon group, is added and contacted thereto to obtain the catalyst component (A).

The oxygen-containing organic compound of silicon of the formula $t\text{-}Bu(R^1)Si(OR^2)_2$ is used in an amount of from 0.5 to 100 mol, preferably from 1 to 60 mol, per gram atom of titanium in the solid catalyst component. If the amount is smaller than this range, it tends to be difficult to obtain a highly rigid polymer. On the other hand, if the amount is too much, the catalytic activities tend to deteriorate.

The addition and contacting to obtain the catalyst component (A) are conducted usually at a temperature within a range of from -50 to 150°C, preferably from 0 to 100°C, for at least 5 minutes, preferably at least 10 minutes, in an inert gas atmosphere under an ordinary pressure or an elevated pressure.

After contacting, the catalyst component (A) is used without subjecting it to a washing operation.

The catalyst component (A) thus obtained is used for polymerization of an olefin in combination with the organometallic compound of component (B).

The organometallic compound of component (B) may, for example, be an organometallic compound comprising a metal such as lithium, magnesium, zinc, tin or aluminum, and an organic group. As the organic group, an alkyl group may be mentioned as a representative. As such an alkyl group, a liner or branched alkyl group having from 1 to 20 carbon atoms may, be employed. Specifically, n-butyl lithium, diethylmagnesium, diethylzinc, trimethylaluminum, triethylaluminum, tri-i-butylaluminum, tri-n-butylaluminum, tri-n-decylaluminum, tetraethyltin or tetrabutyltin, may, for example, be mentioned.

Among them, a trialkylaluminum of the formula $AlR^7{}_3$ is preferred. In the formula, $R^7$ is a linear or branched alkyl group having from 1 to 10 carbon atoms. Specific examples include trimethylaluminum, triethylaluminum, tri-n-propylaluminum, tri-n-butylaluminum, triisobutylaluminum, triisoprenylaluminum, tri-n-hexylaluminum, tri-n-octylaluminum and tri(2-methylpentyl)aluminum.

Further, an alkylaluminum halide, an alkylaluminum hydride or an alkylaluminum alkoxide of the formula $AlR^8{}_eY_{3-e}$ may also be used. In the formula, $R^8$ is a linear or branched alkyl group having from 1 to 10 carbon atoms, Y is halogen, hydrogen or alkoxy, and e is a number satisfying $0<e<3$. Specific examples include dimethylaluminum chloride, methylaluminum sesquichloride, methylaluminum dichloride, diethylaluminum chloride, ethylaluminum sesquichloride, ethylaluminum dichloride, di-n-propylaluminum chloride, di-n-butylaluminum chloride, diisobutylaluminum chloride, isobutylaluminum dichloride, diethylaluminum iodide, diethylaluminum fluoride, diethylaluminum bromide, diisobutylaluminum hydride, diethylaluminum hydride, diethylaluminum methoxide, diethylaluminum ethoxide, diisobutylaluminum methoxide, diisobutylaluminum ethoxide and diisobutylaluminum isopropoxide.

These organometallic compounds may be used alone or in combination as a mixture of two or more of them.

The catalyst component (A) is used preferably in an amount corresponding to from 0.001 to 2.5 mg atom of the titanium atom in the catalyst component (A) per liter of the reactor. The organometallic compound of component (B) is used in an amount corresponding to from 1 to 2,000 mol, preferably from 2 to 500 mol, per gram atom of titanium in the catalyst component (A).

Polymerization of an olefin is conducted in a gas phase or in a liquid phase at a reaction temperature lower than the melting point of the polymer. When the polymerization is conducted in a liquid phase, the olefin itself may be used as the reaction medium, but an inert solvent may be used as the reaction medium. As such an inert solvent, any solvent which is commonly used in this technical field, may be used. However, an alkane or a cycloalkane having from 4 to 20 carbon atoms, such as isobutane, pentane, hexane or cyclohexane, may preferably be used.

As the olefin to be polymerized by the method for producing a stereoregular polyolefin according to the present invention, ethylene and/or an $\alpha$-olefin of the formula $R\text{-}CH=CH_2$ wherein R is a linear or branched, substituted or unsubstituted alkyl group having from 1 to 10 carbon atoms, preferably from 1 to 8 carbon atoms, may be used. Specifically, such an $\alpha$-olefin may, for example, be propylene, 1-butene, 1-pentene, 4-methyl-1-pentene or 1-octene.

These olefins may be subjected to not only homopolymerization, but also random copolymerization or block copolymerization. In the case of copolymerization, at least two members from the above-mentioned ethylene and/or $\alpha$-olefins, or an $\alpha$-olefin and a diene such as butadiene or isoprene, are used for polymerization. It is particularly preferred to conduct polymerization by using propylene, propylene and ethylene, propylene and the above-mentioned $\alpha$-olefin other than propylene, or propylene and a diene.

The reaction conditions for polymerization are not particularly limited so long as the reaction is conducted at a reaction temperature lower than the melting point of the polymer. However, they are usually selected so that the reaction temperature will be from 20 to 100°C, and the pressure will be from 2 to 50 kg/cm²G.

The reactor to be used for the polymerization step may be of any type which is commonly used in this technical field. Namely, using a stirring tank type reactor, a fluidized bed reactor or a circulating system reactor, the polymerization operation can be conducted by any one of the continuous, semi-batch and batch systems. Further, the polymerization can be conducted in a plurality of steps under different polymerization conditions.

Now, the present invention will be described in further detail with reference to Examples. However, it should be understood that the present invention is by no means restricted by such specific Examples. In the Examples and Comparative Examples, the melt flow rate (hereinafter referred to simply as MFR) was measured in accordance with JIS K7210 condition 14.

The xylene soluble content (hereinafter referred to simply as $X_Y$) as an index of stereoregularity, is measured as follows. 4 g of a polymer is dissolved in 200 ml of xylene and then left to stand at 25°C for one hour in a constant temperature tank, whereupon the precipitates are filtered off to recover the filtrate. Xylene is evaporated from the filtrate, and the residue is further subjected to vacuum drying to recover the xylene soluble content. $X_Y$ is then represented by the percentage of the xylene soluble content to the initial weight of 4g the polymer.

The activity shows the amount (g) of a polymer produced per gram of the solid catalyst component.

With respect to the width of the particle size distribution of the polymer particles, the results obtained by classifying the polymer particles by sieves, are plotted on a probability logarithmic paper to obtain the geometric standard deviation from the approximated straight line in a known manner, and the width is expressed in terms of its common logarithm (hereinafter referred to as σ).

Further, the average particle size is a value obtained by reading the particle size corresponding to the weight accumulated value 50% of the above approximated line.

The content of fine particles was represented by the weight percentage of the proportion of fine particles having a particle size of not more than 105 μm.

The flexural modulus of elasticity was measured in accordance with JIS K7203.

## EXAMPLE 1

### (a) Preparation of a solid catalyst component (A)

Into a 3 ℓ flask equipped with a stirrer, 15 g (0.62 mol) of metal magnesium powder were charged, and 0.75 g of iodine, 229.4 (3.1 mol) of butanol, 210 g (0.62 mol) of titanium tetra-n-butoxide and 252 g (1.23 mol) of tri-i-propoxyaluminum were added thereto. The mixture was heated to 90°C and stirred for one hour under sealing with nitrogen. Then, the temperature was raised to 120°C, and the reaction was conducted for 2 hours to obtain a homogeneous solution containing magnesium, titanium and aluminum (a Mg-Ti-Aℓ solution).

Into a flask equipped with a stirrer and having an internal capacity of 500 mℓ, the Mg-Ti-Aℓ solution was charged in an amount of 0.066 mol in terms of Mg and cooled to 0°C. Then, a solution having 20.5 g (0.13 mol) of isobutylaluminum dichloride diluted with 157 mℓ of hexane, was added thereto over a period of 2 hours. After adding the entire amount, the temperature was raised to 70°C over a period of 2 hours to obtain a slurry containing a white solid product. The solid product was separated by filtration and then washed with hexane.

The slurry containing the white solid product thus obtained was charged into a 1 ℓ electromagnetic stirring type autoclave made of glass, and a solution having 125 g (0.66 mol) of titanium tetrachloride diluted with 125 g of chlorobenzene, was added thereto in its entire amount. Then, 7.3 g (0.026 mol) of diisobutyl phthalate was added thereto, and the mixture was reacted at 100°C for 2 hours. The product was filtered to obtain a solid content, which was again suspended in a solution having 125 g of titanium tetrachloride diluted with 125 g of chlorobenzene, and the suspension was stirred at 100°C for 1 hour. To the product, hexane was added, and an washing operation was thoroughly conducted until a free titanium compound was no more detected. Thus, a slurry of a solid component suspended in hexane was obtained. After removing the supernatant, the slurry was dried under a nitrogen atmosphere and subjected to elemental analysis, whereby Ti was 2.8 % by weight.

The interior of an electromagnetic stirring type autoclave made of stainless steel and having an internal capacity of 1 ℓ, was thoroughly flushed with nitrogen, 5.0 g of the obtained solid catalyst component, 300 mℓ of hexane and 5.8 mmol of triethylaluminum were sequentially charged. After adjusting the internal pressure of the autoclave to 0.1 kg/cm$^2$G and the internal temperature to 20°C, stirring was initiated. While maintaining the internal temperature at 20°C, 10 g of propylene was supplied over a period of 20 minutes, followed by stirring for 30 minutes. A propylene prepolymer of the solid catalyst component thus obtained, was separated by filtration and thoroughly washed with hexane. After removing the supernatant, it was dried under a nitrogen atmosphere, whereupon the yield was 14.0 g.

Into a flask equipped with a stirrer and having an internal capacity of 500 mℓ, the total amount of 14.0 g of the propylene prepolymer of the solid catalyst component thus obtained was charged, and 125 g of liquid parafin Christol 352 manufactured by Esso Company was added and suspended therein. To this suspension, 1.67 g (8.77 mmol) of t-butyl-n-propyldimethoxysilane was added at room temperature, and the mixture was stirred for 30 minutes to obtain catalyst component (A).

### (b) Polymerization of propylene

The interior of an electromagnetic stirring type autoclave made of stainless steel and having an internal capacity of 5 ℓ, was thoroughly flushed with nitrogen, and 2.4 mmol of triethylaluminum as catalyst component (B)and 0.56 g of catalyst component (A) (containing 56 mg of the propylene prepolymer and 20 mg of the solid catalyst component were sequentially charged. After adjusting the internal pressure of the autoclave to 0.1 kg/cm$^2$G, 0.2 kg/cm$^2$G of hydrogen was charged, and 2000 mℓ of liquid propylene was added thereto, and stirring was initiated. Then, the temperature was raised to 70°C, and polymerization was

EP 0 582 943 A2

conducted for 90 minutes. After completion of the polymerization reaction, stirring was stopped and at the same time, unreacted propylene in the system was discharged, and the formed polymer was recovered. As a result, the formed polymer was 880 g, which corresponded to an activity of 44000 g/g. Various properties of the polymer particles were examined to obtain results such that MFR was 1.1 g/10 min, $X_Y$ was 1.5%, the bulk density was 0.48 g/cm$^3$, the average particle size was 1950 $\mu$m, $\sigma$ was 0.10, and the fine particle content was 0% by weight. Further, the formed polymer particles were spherical.

To the obtained polymer particles, 500 ppm of IRGANOX 1010 (manufactured by Ciba Geigy), 2000 ppm of IRGANOX 168 (manufactured by Ciba Geigy), 1000 ppm of calcium stearate (manufactured by Nippon Oil and Fat Co., Ltd.) and 5000 ppm of DHT4A (manufactured by Kyowa Chemical Co., Ltd.) were added and mixed, and the mixture was granulated by means of a 25 mm single screw extrusion granulating machine. The obtained pellets were molded by means of an injection molding machine SAV-30A Model manufactured by Yamagi Seiki Seisakusho at a melt temperature of 250°C and a mold temperature of 40°C to obtain prescribed test pieces, which were stored for 72 hours under such conditions that the humidity was 50%, and the room temperature was 23°C, whereupon the flexural modulus of elasticity was measured, whereby the result was 14500 kgf/cm$^2$.

EXAMPLES 2 and 3 and COMPARATIVE EXAMPLES 1 to 7

Using the same propylene prepolymer of the solid catalyst component as prepared in Step (a) of Example 1, catalyst component (A) was prepared under the same conditions as in Step (a) of Example 1 except that instead of 8.77 mmol of t-butyl-n-propyldimethoxysilane, the same mmol of the oxygen-containing organic compound of silicon as identified in Table 1 was used, and polymerization of propylene and measurement of the flexural modulus of elasticity were conducted under the same conditions as in Step (b) of Example 1. The activity, the MFR, $X_Y$, bulk density, average particle size, $\sigma$ and fine particle content of the polymer particles and the flexural modulus of elasticity of the molded product are shown in Table 1.

COMPARATIVE EXAMPLE 8

In Example 1, after contacting the solid catalyst component (A) and t-butyl-n-propyldimethoxysilane in the liquid parafin, the product was washed seven times with 300 m$\ell$ of hexane by decantation, and then hexane was evaporated to dryness. The product was again suspended in 125 g of liquid parafin and used for polymerization of propylene. Except for the foregoing, the catalyst component (A) was prepared and the polymerization of propylene and measurement of the flexural modulus of elasticity were conducted under the same conditions as in Example 1. The activity, the MFR, $X_Y$, bulk density, average particle size, $\sigma$ and fine particle content of the polymer particles and the flexural modulus of elasticity of the molded product are shown in Table 1.

COMPARATIVE EXAMPLE 9

Catalyst component (A) was prepared under the same conditions as in Comparative Example 8 except that t-butyl-methyldimethoxysilane was used instead of t-butyl-n-propyldimethoxysilane used in Comparative Example 8. The activity, the MFR, $X_Y$, bulk density, average particle size, $\sigma$ and fine particle content of the polymer particles, and the flexural modulus of elasticity of the molded product are shown in Table 1.

9

Table 1

| | Oxygen-containing compound of silicon | Washing with hexane | Activity g/g cata. | MFR g/10 min. | $X_y$ % | Bulk density g/cm$^3$ | Average particle size $\mu$m | $\sigma$ | Fine particle content % | Flexural modulus of elasticity kgf/cm$^2$ |
|---|---|---|---|---|---|---|---|---|---|---|
| Example 1 | 1-Butyl-n-propyldimethoxysilane | Nil | 44000 | 1.1 | 1.5 | 0.48 | 1950 | 0.10 | 0 | 14500 |
| Example 2 | t-Butyl-n-butyldimethoxysilane | Nil | 42300 | 1.3 | 1.6 | 0.48 | 1920 | 0.10 | 0 | 14400 |
| Example 3 | t-Butyl-n-hexyldimethoxysilane | Nil | 45700 | 1.1 | 1.1 | 0.48 | 1980 | 0.10 | 0 | 15000 |
| Comparative Example 1 | n-Propyl-trimethoxysilane | Nil | 23900 | 28.8 | 17.4 | Massive | - | - | - | 7200 |
| Comparative Example 2 | Diphenyldimethoxy-silane | Nil | 34100 | 36.9 | 16.4 | Massive | - | - | - | 7800 |
| Comparative Example 3 | Diisobutyldimethoxy-silane | Nil | 38300 | 22.7 | 5.1 | 0.39 | 1860 | 0.14 | 0 | 9200 |
| Comparative Example 4 | di-t-Butyldimethoxysilane | Nil | 29100 | 1.6 | 4.4 | 0.45 | 1700 | 0.11 | 0 | 12600 |
| Comparative Example 5 | t-Butyl-methyldimethoxysilane | Nil | 43200 | 3.2 | 1.8 | 0.45 | 1940 | 0.11 | 0 | 13200 |
| Comparative Example 6 | Cyclohexylmethyl-dimethoxysilane | Nil | 38300 | 27.9 | 16.0 | Massive | - | - | - | 7700 |
| Comparative Example 7 | Dicyclopentyl-dimethoxysilane | Nil | 43700 | 2.1 | 2.1 | 0.46 | 1950 | 0.11 | 0 | 13800 |
| Comparative Example 8 | t-Butyl-n-propyldimethoxysilane | Yes | 29100 | 19.9 | 15.8 | Massive | - | - | - | 7800 |
| Comparative Example 9 | t-Butyl-methyldimethoxysilane | Yes | 22100 | 37.1 | 23.5 | Massive | - | - | - | 7100 |

The first effect of the present invention is that the control of the molecular weight and the molecular weight distribution of the polymer is easy. Especially when compared with conventional magnesium halide-supporting type catalysts, it is possible to produce a polymer having a wide molecular weight distribution in good yield, and yet the stereoregularity of the formed polymer is very high, whereby a highly rigid polymer can be produced.

The second effect is that the powder properties are excellent, whereby it is possible to obtain polymer particles having a high bulk density and a desired average particle size with little fine particles, particularly it is possible to obtain polymer particles of a pellet size with a particle diameter as large as a few mm. This is particularly remarkable, when the present invention is applied to a gas phase polymerization.

The third effect is that the polymerization activity is very high, and it is possible to obtain a polymer which does not require a deashing step for the purpose of removing the residual catalyst. The activity is so high that the product is free from coloring or the like, whereby the process will be very economical without necessity to purify the polymer.

The fourth effect is that the stereoregularity of the polymer is very good. Accordingly, the present invention is very advantageous for the production of a polymer by a gas phase polymerization method using no reaction medium.

## Claims

1. A method for producing a polyolefin in the presence of a catalyst comprising a transition metal compound and an organometallic compound, which comprises polymerizing at least one olefin in the presence of a catalyst system comprising:

   (A) a suspension state catalyst component obtained by adding and contacting an oxygen-containing organic compound of silicon of the formula $t\text{-}Bu(R^1)Si(OR^2)_2$ wherein t-Bu is a tertiary butyl group, $R^1$ is a $C_{2-20}$ linear hydrocarbon group, and $R^2$ is a $C_{1-5}$ hydrocarbon group, to a suspension having a solid catalyst component containing magnesium, titanium, halogen and an electron donative compound suspended in an inert solvent, in an amount of from 0.5 to 100 mols per gram atom of titanium in the solid catalyst component, and

   (B) at least one member selected from the group consisting of organometallic compounds of metals of Groups IA, IIA, IIB, IIIB and IVB of the Periodic Table.

2. The method according to Claim 1, wherein the solid catalyst component is prepared by reacting a homogeneous solution containing

   (i) at least one member selected from the group consisting of metal magnesium and a hydroxylated organic compound, and oxygen-containing organic compounds of magnesium,

   (ii) an oxygen-containing organic compound of aluminum, and

   (iii) an oxygen-containing organic compound of titanium, with

   (iv) an at least one aluminum halide, to obtain a solid product; and reacting the solid product with

   (v) an electron donative compound, and

   (vi) a titanium halide compound, wherein a gas phase polymerization method is employed for the polymerization.

3. The method according to Claim 1, wherein components (A) and (B) are preliminarily mixed, followed by the polymerization.

4. The method according to Claim 1, wherein $R^1$ in the formula $t\text{-}Bu(R^1)Si(OR^2)_2$ is a $C_{2-4}$ linear hydrocarbon group.

5. The method according to Claim 1, wherein $R^2$ in the formula $t\text{-}Bu(R^1)Si(OR^2)_2$ is a $C_{1-2}$ hydrocarbon group.

6. The method according to Claim 1, wherein the compound of the formula $t\text{-}Bu(R^1)Si(OR^2)_2$ is used in an amount of from 1 to 60 mol per gram atom of titanium.

7. The method according to Claim 1, wherein the inert solvent is liquid paraffin.

8. The method according to Claim 1, wherein the catalyst component (A) is used without subjecting it to a washing operation.

9. The method according to Claim 2, wherein a gas phase polymerization method is employed for the polymerization.

**10.** The method according to Claim 1, wherein the component (B) is an organometallic compound consisting of a metal selected from the group consisting of lithium, magnesium, zinc, tin and aluminum, and an organic group selected from the group consisting of $C_{1-20}$ alkyl groups.

**11.** The method according to Claim 1, wherein the component (B) is a trialkyl aluminum of the formula $AℓR^7{}_3$ wherein $R^7$ is a $C_{1-10}$ alkyl group, or an alkylaluminum halide of the formula $R^8{}_e Aℓ Y_{3-e}$ wherein $R^8$ is a $C_{1-10}$ alkyl group, Y is a halogen atom, a hydrogen atom or an alkoxy group, and $0 < e < 3$.